# EUROPEAN PATENT APPLICATION

(11) **EP 4 094 879 A1**
(43) Date of publication of application: **30.11.2022**
(21) Application number: 21176681.1
(22) Date of filing: 28.05.2021
(51) Int. Cl.: B23K 26/24, B23K 26/323, B23K 103/10, B23K 103/12

(54) **METHOD OF LASER WELDING**

(71) Applicant: Volvo Car Corporation, 40531 Göteborg (SE)
(72) Inventor: Todal, Urban, 442 34 Kungälv (SE)
(74) Representative: Nederlandsch Octrooibureau

(57) **Abstract**

The invention relates to a method of joining a first and a second object, each object having a substantially flat surface. The method comprises the steps of:
- Placing the objects with their surfaces in a contacting relationship along an interface, with their surfaces substantially parallel, the interface having a peripheral edge,
- irradiating a laser beam with a focal point onto the peripheral edge in the direction of the interface while the plates are in a contacting relationship, and
- moving the focal point of the laser beam along the interface in a direction transversely to the edge, to a position at a distance from the edge.

## Description

### Technical Field

The invention relates to a method of laser welding a first and a second object, each object having a substantially flat surface, the method comprising the step of placing the objects with their surfaces in a contacting relationship along an interface.

### Background Art

It is known to join two metal trips in a contacting relationship by bringing the strips together between two pressure rollers. The strips are spaced apart before entering between the pressure rollers and a laser beam irradiates the strips at their point of contact prior to being pressed together to form a kissing weld.

The known method comprises heavy rollers for compression of the plates and requires a relatively large footprint.

### Summary of the Invention

It is an object of the invention to provide a method of laser welding two metal objects with their surfaces in a contacting relationship, thereby obtaining a strong bond. It is a further object of the invention to provide a method of laser welding two objects that requires a relatively small foot print and that can be easily integrated in a production environment.

Herein a method according to the invention comprises the steps of:
- placing the objects with their surfaces in a contacting relationship along the interface with their surfaces substantially parallel, the interface extending to a peripheral edge,
- irradiating a laser beam with a focal point onto the peripheral edge in the direction of the interface while the objects are in a contacting parallel relationship, and
- moving the focal point of the laser beam along the interface in a direction transverse to the peripheral edge, to a position at a distance from the edge.

The laser beam was found to penetrate a relatively long distance from the peripheral edge by melting both metals on either side of the interface while forming a strong bond of the molten metals after switching off the beam.

In an embodiment of the method according to the invention, the first object comprises aluminium, the second object comprises copper. It was found that the welding method according to the invention achieves a strong copper to aluminium bond that is not brittle, over a large bonding area, resulting in a strong bond.

### Brief Description of the Drawings

An embodiment of the laser welding method will, by way of non-limiting example, be described in detail with reference to the accompanying drawings. In the drawings:
Fig. 1 shows a schematic lay-out of the laser welding method according to the invention,
Fig. 2 shows a side view of a laser weld formed between an aluminium and a copper strip, and
Fig. 3 shows a view of a cross-section of the weld of figure 2 on an enlarged scale, in a vertical orientation.

### Description of Embodiments

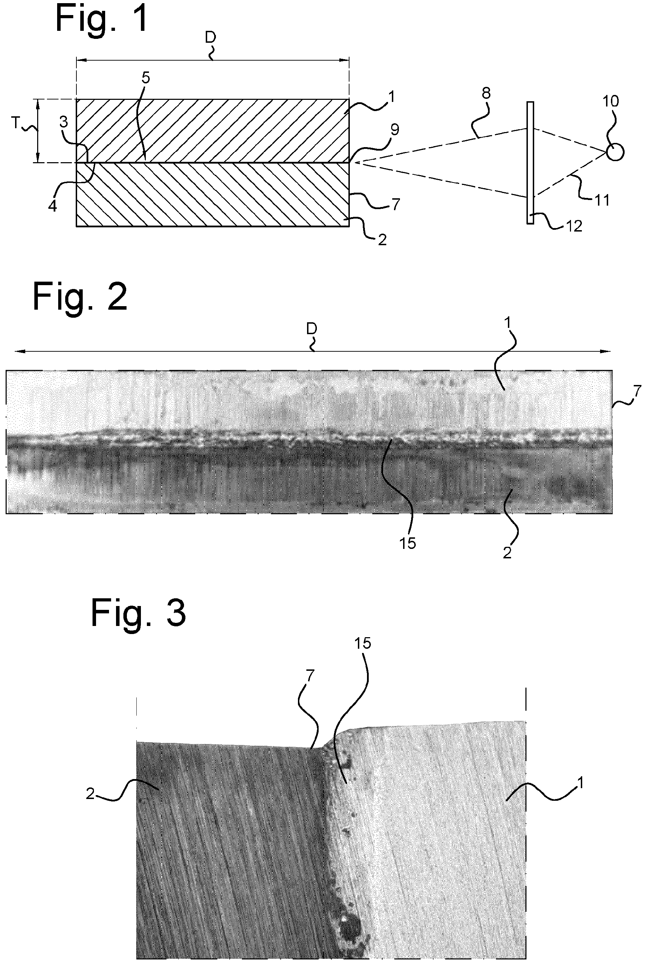

Figure 1 shows an aluminium plate 1 and a copper plate 2, each with a substantially flat contact surface 3, 4. The surfaces 3, 4 are placed in a contacting relationship along the interface 5. The plates 1,2 may have a thickness T of for instance 1mm-10 mm and may be of larger thickness such as up to 20 mm and more.

A laser source 10 generates a laser beam 8 that is focused through optics 12 in a focal point 9 onto a perimeter 7 of the plates 3, 4 at the position of the interface 5.
In a test set up, a copper and aluminum plate were placed, according to the invention, with their flat surfaces in a contacting relationship, each plate having a thickness of 3mm. Using a Trudisk 6001 laser welding device, marketed by the Trumpf GmbH, Germany, at a Laser power of 3000 W and a focal spot diameter of 0,17 mm, the laser was irradiated onto the perimeter 7 of the stacked plates, to melt the metal surfaces on each side of the interface 5.

The focal point 9 of the laser penetrated a distance D of over 5 mm between the plates 1,2, and as long as several cm, along the interface 5, away from the perimeter 7.

Figure 2 shows an example of the weld 15 formed along the interface 5 of an aluminium plate 1 and copper plate 15 along a length D that may be up to several cm, or longer.

Figure 3 shows an enlarged cross-section of the weld 15, in a vertical orientation, along which a homogeneous alloy of the copper and aluminium is formed over a large surface area and a very strong bond is achieved.

## Claims

1. Method of joining a first and a second object (1,2), each object having a substantially flat surface (3,4), the method comprising the steps of:
- placing the objects with their surfaces (3,4) in a contacting relationship along an interface (5), with their surfaces substantially parallel, the interface extending to a peripheral edge (7),
- irradiating a laser beam (8) with a focal point (9) onto the peripheral edge (7) in the direction of the interface (5) while the objects (1,2) are in a contacting parallel relationship, and
- moving the focal point (9) of the laser beam (8) along the interface (5) in a direction transverseto the peripheral edge (7), to a position at a distance from D the peripheral edge (7).

2. Method according to claim 1, wherein the first object (1) comprises aluminium, and the second object (2) comprises copper.

3. Method according to claim 1 or 2, wherein a dimension of the focal point (9) of the laser beam (8) is between 0.01 mm and 0.5 mm and the distance D from the peripheral edge (7) is between 0.5 mm and 50 mm.

4. Method according to any of the preceding claims, wherein the power of the laser bream is at least 2500 W, preferably at least 3000 W, more preferably at least 4000 W.
